# EUROPÄISCHE PATENTSCHRIFT

(11) **EP 1 707 788 B1**
(45) Veröffentlichungstag und Bekanntmachung des Hinweises auf die Patenterteilung: **27.07.2016**
(21) Anmeldenummer: 06000101.3
(22) Anmeldetag: 04.01.2006
(51) Int. Cl.: F02K 9/12, F02K 9/18, F02K 9/20

(54) **Konfiguration eines Feststofftreibsatzes**
Configuration of a solid propellant charge
Configuration pour un pain de propergol solide

(30) Priorität: 30.03.2005 DE 102005014238
(43) Veröffentlichungstag der Anmeldung: 04.10.2006
(73) Patentinhaber: Bayern-Chemie Gesellschaft für flugchemische Antriebe mbH, 84544 Aschau a. Inn (DE)
(72) Erfinder: Naumann, Karl Wieland, Dr., 84454 Mühldorf/Inn (DE)
(74) Vertreter: LS-MP von Puttkamer Berngruber Loth Spuhler

(56) Entgegenhaltungen:
- DE-B- 1 264 869
- DE-C1- 19 508 830
- JP-A- 59 099 051
- US-A- 2 820 410
- US-A- 2 987 881
- US-A- 3 033 117
- US-A- 3 073 242
- US-A- 3 349 565
- US-A- 3 677 010

## Beschreibung

Die Erfindung bezieht sich auf ein Feststoffraketen-Triebwerk nach dem Oberbegriff des Anspruchs 1.

Aus der US-amerikanischen Patentanmeldung US 3,033,117 A ist ein konventioneller Feststoffraketenmotor offenbart, der eine Brennkammer und Laval-Düse aufweist. Ziel dieser Technologie ist es, einen Raketenmotor bereit zu stellen, der eine gleichmäßige Schubentwicklung gewährleistet. Feststoffraketenantriebe wie derjenige, der in diesem Dokument dargestellt ist, erreichen einen gleichmäßigen Schub, indem die Abbrandoberfläche über die gesamte Brenndauer konstant bleibt. Folglich wird eine Abstimmung zwischen einem sich aufweitenden Spaltquerschnitt und der zunehmenden Abbrandoberfläche in diesem Dokument nicht hergestellt. Dies ist jedoch für einen düsenlosen Booster nach der vorliegenden Anmeldung von Bedeutung.

Aus dem japanischen Dokument JP 59 099051 A ist ein düsenloser Booster bekannt, bei dem jedoch keine Aussage zu einer Beeinflussung der Abbrandoberfläche gegeben ist. Denn diesem Dokument liegt die Aufgabe zugrunde, bei einem Hochschubtriebwerk extrem hohe Strömungsgeschwindigkeiten am Austritt der Spalte zwischen den Treibsätzen zu vermeiden.

Die US-amerikanische Patentanmeldung US 3,349,565 A offenbart Treibsätze, zwischen denen eine konische Spalte angeordnet ist, die dazu dient, mittels axialer Verschiebung eine definierte Spaltweite einstellen zu können. Nach dieser Offenbarung ist angestrebt, durch die Variation der Geschwindigkeit der Spaltströmung die Abbrandrate des Treibstoffs zu beeinflussen. Hierzu wird eine Variation des Düsenquerschnitts vorgeschlagen.

In der US 3,073,242 A wird eine Treibsatzkonfiguration beschrieben, bei der bei variabler Dicke der Treibstoffschicht eine überall gleich bleibende Abbrandzeit erreicht wird. Die gleichbleibende Abbrandzeit wird durch die Kombination von zwei Treibstoffen mit unterschiedlicher Abbrandrate sichergestellt. Vergleichbar mit der US 3,033,117 soll ein möglichst gleichbleibender Massestrom erzielt werden.

Aus der US 2,820,410 A entnimmt der Fachmann ebenfalls eine Treibsatzkonfiguration, bei der ein Treibsatz an seiner Kopfseite an der Schnittstelle zwischen einem Brennkammerzylinder und einem Kopfteil angeordnet ist. Die Schnittstelle ist gegenüber dem Brennkammerzylinder abgedichtet. Dieses Dokument geht von einem einzelnen Treibsatz aus.

Ein derartiges Feststoffraketen-Triebwerk ist bekannt. Dabei wird ein brennkammerwandgebundener, zylindrischer Innenbrennertreibsatz mit einer rohrförmigen oder ähnlichen Brennfläche und einem sich konisch erweiternden Düsenabschnitt verwendet. Ein solches Feststoffraketen-Triebwerk wird auch als düsenloser Raketenmotor bezeichnet, da die Verbrennungsgase keine Laval-Düse durchströmen, sondern an deren Stelle lediglich der sich erweiternde Düsenabschnitt im Feststofftreibsatz vorgesehen ist.

Ein solcher düsenloser Raketenmotor wird insbesondere als Booster in Marschflugkörpern mit einer Staustrahl-Brennkammer und einem Gasgenerator verwendet (American Institute of Aeronautics and Astronautics XIII International Symposion on Air Breathing Engines, September 7-12, 1997, Chattanooga, Tennessee, USA). Dabei brennt der Feststofftreibsatz in der Boost-phase in der Brennkammer ab, in der dann in der Marschflugphase das vom Gasgenerator erzeugte Gas mit von außen zugeführter Luft verbrannt wird.

Wenn der bekannte als Innenbrenner ausgebildete Boost-Raketenmotor im Hinblick auf eine hohe Leistung (Gesamtimpuls) einen hohen Füllgrad aufweist, treten aufgrund der großen Dicke der Treibstoffschicht beim Abkühlen nach dem Gießen des Treibsatzes oder durch Temperaturschwankungen (ca. - 50 °C bis + 70 °C) erhebliche Dehnungen auf, die die mechanische Beständigkeit des Treibsatzes herabsetzen. D.h., hoher Füllgrad und damit hohe Leistung und hohe mechanische Beständigkeit lassen sich nicht miteinander in Einklang bringen. Weiterhin wächst bei dem bekannten Innenbrenner-Booster im Verlauf des Abbrands die Abbrandoberfläche ungefähr proportional dem Innenradius, die Ausströmquerschnittsfläche, jedoch proportional dem Quadrat des Innenradius der z.B. rohrförmigen Brennfläche. Damit nimmt bei dem bekannten Innenbrenner das Verhältnis der Abbrandoberfläche zur Querschnittsfläche der Düse, also dem Querschnitt am Ende der rohrförmigen Brennfläche, die sogenannte Klemmung im Verlauf des Brandes ab, was zu einer starken Druckabnahme und damit Herabsetzung des spezifischen Impulses, also der Effektivität und gegebenenfalls des Schubes führt.

Aufgabe der Erfindung ist es daher, einen düsenlosen Boost-Raketenmotor bereitzustellen, der eine hohe Leistung und hohe mechanische Beständigkeit bei möglichst konstantem hohem spezifischen Impuls besitzt.

Dies wird erfindungsgemäß mit dem im Anspruch 1 gekennzeichneten Feststoffraketen-Triebwerk erreicht. In den Unteransprüchen sind vorteilhafte Ausgestaltungen der Erfindung wiedergegeben.

Das erfindungsgemäße Feststoffraketen-Triebwerk weist einen Koaxialtreibsatz auf, der aus einem als Außenbrenner ausgebildeten Innentreibsatz und einem als Innenbrenner ausgebildeten Außentreibsatz besteht, die beide koaxial zur Längsachse der Brennkammer angeordnet sind. Der Außentreibsatz ist mit radialem Abstand von dem Innentreibsatz angeordnet, so dass zwischen Außentreibsatz und Innentreibsatz ein koaxialer Ringspalt gebildet wird.

An den Ringspalt schließt sich vorzugsweise ein sich nach hinten erweiternder Düsenabschnitt an. Dazu kann sich der hintere Endabschnitt des Innentreibsatzes an der Außenseite nach innen verjüngen, während sich die Innenseite des hinteren Endabschnitts des Außentreibsatzes nach außen erweitert.

Der ringförmige, sich an den Ringspalt anschließende Düsenabschnitt des Koaxialtreibsatzes kann dabei im Querschnitt dem sich erweiternden Abschnitt einer Laval-Düse entsprechen. Er kann dazu im Querschnitt konusförmig ausgebildet sein. Bei einer konusförmigen Ausbildung des ringförmigen Düsenabschnitts weist der hintere Endabschnitt des Innentreibsatzes eine konisch- oder konusstumpfförmige Verjüngung auf, und der hintere Endabschnitt des Außentreibsatzes erweitert sich an seiner Innenseite in Form einer konischen Düse nach außen.

Der Düsenabschnitt kann auch nur durch die Erweiterung des hinteren Endabschnitts des Außentreibsatzes an der Innenseite oder nur durch die Verjüngung des hinteren Endabschnitts des Innentreibsatzes an der Außenseite gebildet sein. Auch ist es möglich, dass der Koaxialtreibsatz zu Beginn des Abbrandes keinen sich erweiternden Düsenabschnitt aufweist, also am Ende plan abgeschnitten ist, wobei sich mit der Abbrandzeit eine gegebenenfalls konische Erweiterung von selbst ausbildet.

Die Spaltweite des Ringspaltes zwischen dem Innentreibsatz und dem Außentreibsatz kann, abgesehen vom Düsenabschnitt, über die Länge konstant sein oder sich ändern.

Während sich der Außendurchmesser des Innentreibsatzes eines Koaxialtreibsatzes während des Abbrands verringert, nimmt der Innendurchmesser des Außentreibsatzes zu. Damit vergrößert sich der radiale Abstand des Innentreibsatzes vom Außentreibsatz und damit die Breite des Ringspalts zwischen Innentreibsatz und Außentreibsatz. Die Abbrandoberfläche des Koaxialtreibsatzes, die sich aus der Abbrandoberfläche an der Außenseite des Innentreibsatzes und der Abbrandoberfläche an der Innenseite des Außentreibsatzes zusammensetzt, bleibt in etwa gleich. Zugleich nimmt aber die Breite des Ringspaltes zu, d.h., die Ausströmungsquerschnittsfläche, also die Querschnittsfläche des Ringspaltes vergrößert sich während des Abbrandes im Quadrat. Dies hat eine stark abnehmende Klemmung und damit entsprechende Abnahme des Drucks, damit des spezifischen Impulses, und gegebenenfalls des Schubs zur Folge.

Erfindungsgemäß ist daher der Koaxialtreibsatz derart ausgebildet, dass seine Abbrandoberfläche über die Brenndauer so zunimmt, dass eine möglichst gleichbleibende Klemmung entsteht. D.h., die Abbrandoberfläche des Koaxialtreibsatzes nimmt erfindungsgemäß progressiv oder exponential mit der Einbrenntiefe über die Brenndauer zu, also mit einem Exponenten von mehr als 1, insbesondere als mehr 1,3, jedoch mit einem Exponenten von weniger als 3, insbesondere weniger als 2.5. Ganz besonders bevorzugt beträgt der Exponent der exponentialen Zunahme der Abbrandoberfläche über die Brenndauer durchschnittlich 1,7 bis 2,3, insbesondere etwa 2.

Erfindungsgemäß ist die Außenfläche des Innentreibsatzes und/oder die Innenfläche des Außentreibsatzes stellenweise mit einer Inhibierung versehen, beispielsweise einer Beschichtung mit einem inerten, jedenfalls langsamer abbrennenden Material als der Treibstoff, aus dem der restliche Treibsatz besteht, um eine progressive Entwicklung der Abbrandoberfläche des Koaxialtreibsatzes zu erzielen.

Durch den Abbrand des Treibstoffs an den nicht inhibierten Stellen werden an der Außenumfangsfläche des Innentreibsatzes und/oder der Innenumfangsfläche des Außentreibsatzes sich über die Brenndauer vergrößernde Vertiefungen gebildet, wodurch die Abbrandoberfläche mit zunehmender Einbrenntiefe, d. h. Brenndauer mehr als proportional, also exponential, vorzugsweise annähernd quadratisch wächst.

Die inhibierten Stellen sind um die Außenumfangsfläche des Innentreibsatzes bzw. die Innenumfangsfläche des Außentreibsatzes bevorzugt gleichmäßig verteilt angeordnet.

Die inhibierten Stellen können dabei eine unterschiedliche Form besitzen. So werden vorzugsweise zur Inhibierung an der Außenumfangsfläche des Innentreibsatzes und/oder der Innenumfangsfläche des Außentreibsatzes im Abstand angeordnete Längsstreifen zur Inhibierung verwendet. Damit werden zwischen den Längsstreifen rinnenförmige Vertiefungen in den Innentreibsatz und/oder Außentreibsatz gebrannt, die sich während der Brenndauer progressiv vergrößern und damit zu einer progressiv anwachsenden Abbrandgeschwindigkeit führen.

Wenn beispielsweise die Außenumfangsfläche des Innentreibsatzes auf diese Weise inhibiert ist, brennt zu Beginn des Abbrandes fast ausschließlich die Innenumfangsfläche des Außentreibsatzes. Durch die so erzielte geringere Abbrandoberfläche und damit verringerten Gasmassenstrom zu Beginn des Abbrandes kann die Querschnittsfläche des Ringspaltes zwischen Innentreibsatz und Außentreibsatz entsprechend reduziert werden. Damit kann schon zu Beginn des Abbrandes die Klemmung eingestellt werden, für die der erfindungsgemäße Koaxialtreibsatz während der restlichen Brenndauer ausgelegt ist. Da der Ringspalt zwischen Innentreibsatz und Außentreibsatz erfindungsgemäß dadurch zu Beginn des Abbrandes eine geringe Breite besitzen kann, kann mit dem erfindungsgemäßen Feststoffraketentriebwerk ein hoher Füllgrad, also ein großes Treibsatzvolumen, bezogen auf das gesamte Brennkammer-Innenvolumen, erzielt werden.

Zur Inhibierung können die verschiedensten Maßnahmen ergriffen werden. Beispielsweise kann auf dem Innentreibsatz eine Schicht aus einem inerten, jedenfalls einem langsamer als der Treibstoff abbrennenden Material aufgetragen, z. B. aufgesprüht werden, beispielsweise ein rußgefüllter Kunststoff. Auch können Streifen, z. B. aus Kunststoff aufgeklebt werden. Die Masse der einzelnen Streifen kann durch konstruktive Maßnahmen, wie Unterteilung weiter verringert werden. Zum Brennschluss hin wird die Inhibierung als Einzelstücke geringer Masse und weicher Konsistenz ausgestoßen.

Eine weitergehende progressive Entwicklung der Abbrandoberfläche des Koaxialtreibsatzes kann erreicht werden, wenn der Außentreibsatz ebenfalls mit einer solchen Inhibierung versehen wird. Die Inhibierung kann dabei beispielsweise auf den Gießkern aufgebracht werden, wobei die Inhibierung nach dem Gießen des Außentreibsatzes mit dem Treibstoff abgelöst wird.

Möglich ist auch eine Anpassung der Inhibierungsfläche über die Treibsatzlänge derart, dass die anfängliche Abbrandoberfläche des Koaxialtreibsatzes und die Breite des Ringspalts zwischen Innentreibsatz und Außentreibsatz optimal aufeinander abgestimmt werden. So kann die mit der Inhibierung abgedeckte Fläche hinten, also düsenseitig größer als vorne an der Kopfseite sein. Dadurch wird im hinteren Bereich des Koaxialtreibsatzes weniger Verbrennungsgas erzeugt als vorne, wodurch die Strömungsgeschwindigkeit der Verbrennungsgase in dem Kanal, der durch den Ringspalt gebildet wird, reduziert und damit die mechanische Belastung des Treibsatzes im hinteren Bereich herabgesetzt wird.

Zur Inhibierung sind nicht nur Streifen aus einem inhibierenden, also inerten bzw. langsamer als der Treibstoff abbrennenden Material geeignet, vielmehr kann das inhibierende Material in unterschiedlicher Weise geformt und angeordnet sein. So können beispielsweise über den Umfang verteilte, inhibierende Materialstücke auch in mehreren Schichten angeordnet sein. Dabei können beispielsweise die Stücke der einen Schicht gegenüber den Stücken der anderen Schicht auf Lücke angeordnet sein. Die inhibierenden Materialstücke können dazu auf der Außenumfangsfläche des Innentreibsatzes und/oder der Innenumfangsfläche des Außentreibsatzes angeordnet oder auch in den Treibsatz eingelassen sein.

Weiterhin kann eine progressive Entwicklung der Abbrandoberfläche auch dadurch erzielt werden, dass an der Außenumfangsfläche des Innentreibsatzes und/oder der Innenumfangsfläche des Außentreibsatzes im Abstand angeordnete, um den Umfang verteilte Ausnehmungen vorgesehen sind. So können z. B. an der Außenumfangsfläche des Innentreibsatzes und/oder der Innenumfangsfläche des Außentreibsatzes Längsrinnen vorgesehen sein. Die Ausnehmungen können mit einer Inhibierung des Treibsatzes kombiniert werden, die außerhalb der Ausnehmungen auf der Außenumfangsfläche des Innentreibsatzes bzw. der Innenumfangsfläche des Außentreibsatzes vorgesehen ist. So können beispielsweise zwischen den zur Inhibierung verwendeten Längsstreifen Längsrinnen in der jeweiligen Umfangsfläche des Innentreibsatzes bzw. Außentreibsatzes vorgesehen sein.

Vorzugsweise brennt der Innentreibsatz so lange wie der Außentreibsatz. Jedoch kann beispielsweise der Innentreibsatz auch früher abbrennen, um Strukturen in oder am Innentreibsatz, wie die nachstehend erwähnten Abstützungen oder Längsträger, zu verbrennen.

Gegenüber einem zylindrischen Innenbrenner kann die Abbrandgeschwindigkeit des Treibstoffs mit dem erfindungsgemäßen Koaxialtreibsatzes bei gleicher Brenndauer deutlich reduziert werden, ohne die ballistische Leistung herabzusetzen. Dies erlaubt beispielsweise den Treibstoff auf mechanische Eigenschaften, wie Dehnfähigkeit, hin zu optimieren.

Darüber hinaus ist die Dicke der Treibstoffschicht des Außentreibsatzes relativ gering, was zu erheblich geringeren Dehnungen beim Abkühlen oder generell bei Temperaturschwankungen führt. Damit ist die ballistische Leistung des Treibsatzes erfindungsgemäß von der Dicke der Treibstoffschicht des kammerwandgebundenen Treibsatzes entkoppelt. Das heißt, der erfindungsgemäße Koaxialtreibsatz kann trotz hohen Füllgrades einen kammerwandgebundenen Außentreibsatz geringer Dicke aufweisen.

Die Zugspannung, welche am Kopf des Innentreibsatzes bei maximal zulässiger Axialbeschleunigung auftritt, liegt im Bereich der für erwärmte Composite-Treibstoffe bekannten Grenzwerte. Zur Entlastung des Innentreibsatzes wird jedoch vorzugsweise ein Längsträger in den Innentreibsatz eingebracht. Dieser Längsträger kann durch ein Längsrohr, ein Profil oder dergleichen gebildet sein. Der Längsträger ist vorzugsweise an der vorderen kopfseitigen Brennkammerwand befestigt. Am Düsenende ist der Innentreibsatz vorzugsweise durch an der Brennkammerstruktur befestigte Abstützungen fixiert. Diese Abstützungen können an dem hinteren Ende des Längsträgers befestigte Speichen sein, die an dem Innentreibsatz angreifende Querkräfte auf die Brennkammerstruktur übertragen. Die Abstützungen und/oder der Längsträger sind vorzugsweise derart dimensioniert, dass sie die Brenndauer des Innentreibsatzes überstehen und im Anschluss daran abbrennen. Der Längsträger und/oder die Abstützungen können dazu aus Faserverbundwerkstoff bestehen, der nach der Boost-Phase abbrennt und dabei keine massiven Ejekta erzeugt.

Der Längsträger muss jedoch nicht an der vorderen kopfseitigen Brennkammerwand befestigt sein, also dort sein Festlager besitzen. Vielmehr kann er auch im hinteren Bereich der Brennkammerstruktur befestigt sein, also dort das Festlager bilden, während das Loslager des Längsträgers im vorderen Bereich der Brennkammerstruktur vorgesehen sein kann.

Falls ein Längsrohr als Längsträger verwendet wird, kann es mit Längsrippen oder -sicken oder dergleichen versehen sein, um die Biegesteifigkeit zu erhöhen. Auch können die vorstehend erwähnten zur Inhibierung verwendeten Längsstreifen als Längsträger ausgebildet sein und die Kräfte aufnehmen sowie den Innentreibsatz versteifen.

Der erfindungsgemäße Koaxialtreibsatz kann insbesondere als Booster in Marschflugkörpern mit einem luftatmenden Staustrahl-Triebwerk verwendet werden. Der Außentreibsatz ist dazu an die Brennkammerwand des Marschflugkörpers gebunden und der Innentreibsatz beispielsweise mit dem oder den Längsträgern an die kopfseitige Brennkammerwand. Der Koaxialtreibsatz ist außenluftunabhängig.

Mit dem erfindungsgemäßen düsenlosen Booster in Koaxialtreibsatz-Bauweise werden die gegensätzlichen Forderungen aus Leistung/Impulsdichte, Beständigkeit gegenüber Temperaturvariationen und Brenngeschwindigkeit entkoppelt. Bei einem sehr hohen Füllgrad kann eine gute Beständigkeit gegen Temperaturvariationen und Begrenzung der im Treibsatz vorkommenden Dehnungen des Treibstoffes erreicht werden. Bei gegebener Brenndauer wird vom Treibstoff eine deutlich geringere Abbrandgeschwindigkeit verlangt als bei einem dem Stand der Technik entsprechenden kammerwandgebundenen Treibsatz als Innenbrenner, sodass ein z. B. hinsichtlich seiner mechanischen Eigenschaften optimierter Treibstoff verwendet werden kann.

Nachstehend wird die Erfindung anhand der beigefügten Zeichnung beispielhaft näher erläutert. Darin zeigen jeweils schematisch:
Figur 1 einen Längsschnitt durch eine Brennkammer mit einen Koaxialtreibsatz; und
Figur 2 einen Schnitt durch den Treibsatz nach Figur 1, wobei die untere Hälfte des Außentreibsatzes weggelassen ist, und;
Figur 3 eine andere Ausführungsform des Innentreibsatzes in zwei Varianten, und zwar mit einer Inhibierung gemäß der linken Hälfte und ohne Inhibierung gemäß der rechten Hälfte.

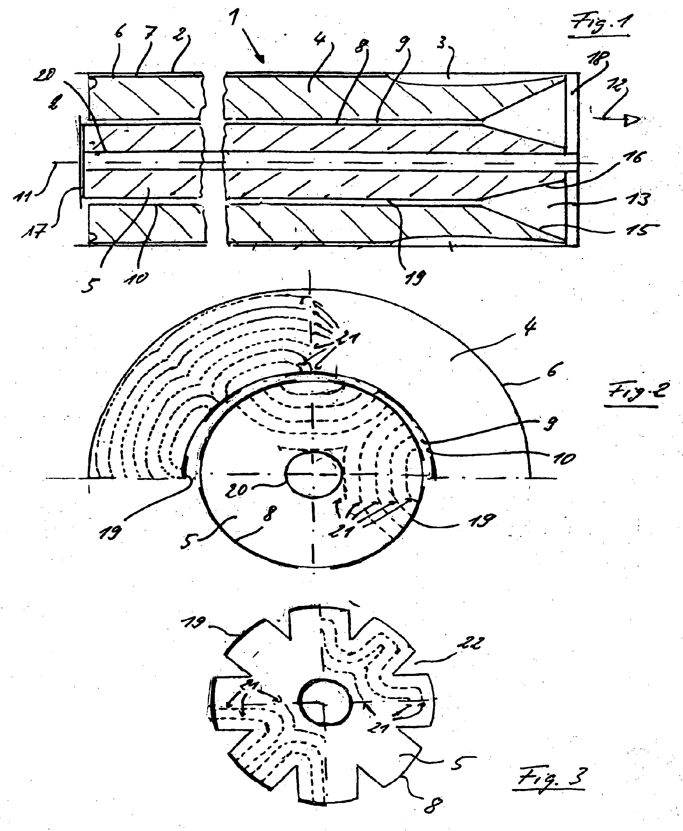

In Figur 1 ist die Brennkammer eines Marschflugkörpers dargestellt, in der während der Startphase als Booster ein Koaxialtreibsatz 1 angeordnet ist. Am hinteren Ende der Brennkammerwand 2 ist eine Staustrahldüse 3 angeordnet. Nach dem Abbrennen des Koaxialtreibsatzes 1, also nach der Startphase, werden der Brennkammer in der Marschflugphase von einem von einem Gasgenerator erzeugter gasförmiger Brennstoff, gegebenenfalls mit Partikeln, und von außen Luft zugeführt. Die Düse 3 ist also nur für die Marschflugphase vorgesehen, nachdem der Koaxialtreibsatz 1 abgebrannt ist. Während des längsten Teils der Startphase wird sie von dem Koaxialtreibsatz 1 bedeckt.

Der als Booster verwendete Koaxialtreibsatz 1 besteht gemäß Figur 1 und 2 aus einem als Innenbrenner ausgebildeten Außentreibsatz 4 und einem als Außenbrenner ausgebildeten Innentreibsatz 5. Der Außentreibsatz 4 ist mit seiner zylindrischen Außenumfangsfläche 6 über eine thermische Isolierungsschicht 7 an die Brennkammerwand 2 und an die Staustrahldüse 3 gebunden. Die Außenumfangsfläche 8 des Innentreibsatzes 5 ist unter Bildung eines Ringspaltes 9 im Abstand von der Innenumfangsfläche 10 des Außentreibsatzes 4 angeordnet. Der Außentreibsatz 4 ist mit seinen zylindrischen Umfangsflächen 6 und 10 axial zur Längsachse 11 der Brennkammer 2 angeordnet, desgleichen der Innentreibsatz 5 mit seiner zylindrischen Außenfläche 7. Mit dem Pfeil 12 ist die Ausströmrichtung der Verbrennungsgase des Treibsatz 1 bezeichnet.

An den Ringspalt 9 schließt sich ein nach hinten konisch erweiternder Düsenabschnitt 13 an. Dazu ist der hintere Endabschnitt 16 des Innentreibsatzes 5 als Konusstumpf ausgebildet, während der hintere Endabschnitt 15 des Außentreibsatzes 4 an der Innenseite eine konische Ausnehmung aufweist.

Der ringförmige, sich an den Ringspalt 9 anschließende Düsenabschnitt 13 des Koaxialtreibsatzes 1 entspricht damit im Querschnitt dem sich erweiternden Abschnitt einer Laval-Düse.

In dem Innentreibsatz 5 erstreckt sich vom vorderen Kopfende bis zum hinteren Ende ein koaxial angeordnetes Rohr als Längsträger 20.

Der Innentreibsatz 5 ist mit seinem kopfseitigen Ende an der vorderen Stirnwand 17 der Brennkammer fixiert. Dazu kann der Treibsatz 5 an die Stirnwand 17 beispielsweise angeklebt sein. Auch ist es möglich, den Längsträger 20 an der Stirnwand 17 zu fixieren, um den Treibsatz 5 zu befestigen.

Zur radialen Fixierung stützt sich der Innentreibsatz 5 mit seinem hinteren Ende an speichenförmigen Abstützungen 18 ab, die einerseits an dem Längsträger 20 und andererseits an der Brennkammerstruktur 2 befestigt sind.

Um eine mit der Brenndauer zunehmende Abbrandoberfläche des koaxialen Treibsatzes 1 zu erzielen, weist der Innentreibsatz 5 an seiner zylindrischen Außenumfangsfläche 8 gemäß Figur 1 und 2 eine Inhibierung in Form von Längsstreifen 19 aus einem inerten Material auf. Damit entstehen beim Abbrand zwischen den Längsstreifen 19 rinnenförmige Vertiefungen, die sich, wie in Figur 2 durch die gestrichelt wiedergegebenen Isoabbrandfortschrittslinien 21 dargestellt, während der Brenndauer progressiv vergrößern. Der Außentreibsatz 4 ist an seiner Innenfläche 10 ebenfalls mit solchen Längsstreifen 19 inhibiert, sodass entsprechende Isoabbrandfortschrittslinien 21 gebildet werden.

Gemäß Figur 3 weist die Außenumfangsfläche 8 des Innentreibsatzes 5 rinnenförmige Längsausnehmungen 22 auf, um die Abbrandoberfläche des Koaxialtreibsatzes 1 während der Brenndauer zusätzlich zu vergrößern.

Wie in der linken Hälfte von Figur 3 dargestellt, können dabei zur zusätzlichen Inhibierung Längsstreifen 19 zwischen den Ausnehmungen 22 vorgesehen sein, oder wie in der rechten Hälfte der Figur 3 gezeigt, die Längsstreifen auch weggelassen werden, um die jeweils optimale Abbrandoberfläche zu erhalten.

Zudem kann die Abbrandcharakteristik des Innentreibsatzes 5 optimiert werden, wenn statt den gezeigten zylindrischen bzw. sternförmigen Querschnittsformen nach Figur 2 und 3 Fin-, Dendrit- oder andere Querschnittsformen verwendet werden.

## Patentansprüche

1. Raketentriebwerk mit einem Feststofftreibsatz, der durch einen Koaxialtreibsatz (1) mit einem als Innenbrenner ausgebildeten, mit seinem Umfang kammerwandgebundenen Außentreibsatz (4) und einem unter Bildung eines Ringspaltes (9) im Abstand von dem Außentreibsatz (4) angeordneten, als Außenbrenner ausgebildeten Innentreibsatz (5) gebildet ist, wobei eine mit der Brenndauer zunehmende, aus der Innenumfangsfläche (10) des Außentreibsatzes (4) und der Außenumfangsfläche (8) des Innentreibsatzes (5) gebildete Abbrandoberfläche des Koaxialtreibsatzes (1) vorgesehen ist, **dadurch gekennzeichnet, dass** der Imnentreibsatz (5) an seiner Außenumfangsfläche (8) und/oder der Außentreibsatz (4) an seiner Innenumfangsfläche (10) stellenweise mit einer Inhibierung versehen ist.

2. Raketentriebwerk nach Anspruch 1, **dadurch gekennzeichnet, dass** die Inhibierung durch auf der Außenumfangsfläche (8) des Innentreibsatzes (5) und/oder der Innenumfangsfläche (10) des Außentreibsatzes (4) im Abstand angeordnete Längsstreifen (19) gebildet wird.

3. Raketentriebwerk nach einem der vorstehenden Ansprüche, **dadurch gekennzeichnet, dass** die Außenumfangsfläche (8) des Innentreibsatzes (5) und/oder die Innenumfangsfläche (10) des Außentreibsatzes (4) im Abstand angeordnete Ausnehmungen aufweist.

4. Raketentriebwerk nach Anspruch 1 und 3, **dadurch gekennzeichnet, dass** die Ausnehmungen zwischen den Inhibierungen an der Außenumfangsfläche (8) des Innentreibsatzes (5) und/oder der Innenumfangsfläche (10) des Außentreibsatzes (4) angeordnet sind.

5. Raketentriebwerk nach Anspruch 3, **dadurch gekennzeichnet, dass** die Ausnehmungen durch Längsausnehmungen (22) gebildet sind.

6. Raketentriebwerk nach Anspruch 2 und 5, **dadurch gekennzeichnet, dass** die Längsausnehmungen (22) zwischen den Längsstreifen (16) vorgesehen sind.

7. Raketentriebwerk nach einem der vorstehenden Ansprüche, **dadurch gekennzeichnet, dass** der Innentreibsatz (20) mit einem Längsträger (16) versehen ist.

8. Raketentriebwerk nach Anspruch 2 und 7, **dadurch gekennzeichnet, dass** die Längsstreifen (16) als Längsträger ausgebildet sind.

9. Raketentriebwerk nach einem der vorstehenden Ansprüche, **dadurch gekennzeichnet, dass** zur radialen Fixierung des hinteren Endes des Innentreibsatzes (5) an der Brennkammerstruktur (2) befestigte Abstützungen (18) vorgesehen sind.

10. Raketentriebwerk nach einem der vorstehenden Ansprüche, **dadurch gekennzeichnet, dass** zur Bildung eines sich erweiternden Düsenabschnitts (13) der hintere Endabschnitt (15) des Außentreibsatzes (4) sich an der Innenseite nach außen erweitert und/oder der hintere Endabschnitt (16) des Innentriebsatzes (5) sich an der Außenseite nach innen verjüngt.

11. Raketentriebwerk nach einem der vorstehenden Ansprüche, **dadurch gekennzeichnet, dass** der Innentreibsatz (5) an der vorderen Stirnwand (17) der Brennkammer fixiert ist.

## Claims

1. Rocket propulsion unit comprising a solid propellant charge which is formed by a coaxial propellant charge (1) having an outer propellant charge (4) configured in the form of an internal burner and linked to the chamber wall with its circumference, and an inner propellant charge (5) configured in the form of an external burner and arranged so as to be spaced apart from the outer propellant charge (4) while forming an annular gap (9), wherein a combustion surface of the coaxial propellant charge (1) is provided which increases over the burning time and which is formed by the inner circumferential surface (10) of the outer propellant charge (4) and the outer circumferential surface (8) of the inner propellant charge (5), **characterized in that** the inner propellant charge (5) on its outer circumferential surface (8) and/or the outer propellant charge (4) on its inner circumferential surface (10) is provided with an inhibition in some places.

2. Rocket propulsion unit according to claim 1, **characterized in that** the inhibition is formed by longitudinal strips (19) arranged on the outer circumferential surface (8) of the inner propellant charge (5) and/or the inner circumferential surface (10) of the outer propellant charge (4) so as to be spaced apart.

3. Rocket propulsion unit according to any of the preceding claims, **characterized in that** the outer circumferential surface (8) of the inner propellant charge (5) and/or the inner circumferential surface (10) of the outer propellant charge (4) has recesses which are arranged so as to be spaced apart.

4. Rocket propulsion unit according to claim 1 or 3, **characterized in that** the recesses are arranged between the inhibitions on the outer circumferential surface (8) of the inner propellant charge (5) and/or the inner circumferential surface (10) of the outer propellant charge (4).

5. Rocket propulsion unit according to claim 3, **characterized in that** the recesses are formed by longitudinal recesses (22).

6. Rocket propulsion unit according to claims 2 and 5, **characterized in** the longitudinal recesses (22) are provided between the longitudinal strips (16).

7. Rocket propulsion unit according to any of the preceding claims, **characterized in that** the inner propellant charge (20) is provided with a longitudinal member (16).

8. Rocket propulsion unit according to claims 2 and 7, **characterized in that** the longitudinal strips (16) are configured in the form of longitudinal members.

9. Rocket propulsion unit according to any of the preceding claims, **characterized in that** supports (18) attached to the combustion chamber structure (2) are provided for radially fixing the rear end of the inner propellant charge (5).

10. Rocket propulsion unit according to any of the preceding claims, **characterized in that**, for forming an enlarging nozzle portion (13), the rear end portion (15) of the outer propellant charge (4) enlarges outwardly on the inside and/or the rear end portion (16) of the inner propellant charge (5) tapers inwardly on the outside.

11. Rocket propulsion unit according to any of the preceding claims, **characterized in that** the inner propellant charge (5) is fixed to the front end wall (17) of the combustion chamber.

## Revendications

1. Moteur-fusée comportant une charge propulsive solide qui est formée par une charge propulsive coaxiale (1) avec une charge propulsive extérieure (4) réalisée sous forme de brûleur intérieur et reliée à la paroi de la chambre par sa périphérie et avec une charge propulsive intérieure (5) réalisée sous forme de brûleur extérieur, agencée à distance de la charge propulsive extérieure (4) en formant une fente annulaire (9), dans lequel est prévue une surface de combustion de la charge propulsive coaxiale (1), qui augmente avec la durée de combustion et qui est formée à partir de la surface périphérique intérieure (10) de la charge propulsive extérieure (4) et de la surface périphérique extérieure (8) de la charge propulsive intérieure (5), **caractérisé en ce que** la charge propulsive intérieure (5), sur sa surface périphérique extérieure (8), et/ou la charge propulsive extérieure (4), sur sa surface périphérique intérieure (10), est pourvue par endroits d'une inhibition.

2. Moteur-fusée selon la revendication 1, **caractérisé en ce que** l'inhibition est formée par des bandes longitudinales (19) agencées de manière espacée sur la surface périphérique extérieure (8) de la charge propulsive intérieure (5) et/ou sur la surface périphérique intérieure (10) de la charge propulsive extérieure (4).

3. Moteur-fusée selon l'une des revendications précédentes, **caractérisé en ce que** la surface périphérique extérieure (8) de la charge propulsive intérieure (5) et/ou la surface périphérique intérieure (10) de la charge propulsive extérieure (4) présente des évidements agencés de manière espacée.

4. Moteur-fusée selon les revendications 1 et 3, **caractérisé en ce que** les évidements sont agencés entre les inhibitions sur la surface périphérique extérieure (8) de la charge propulsive intérieure (5) et/ou sur la surface périphérique intérieure (10) de la charge propulsive extérieure (4).

5. Moteur-fusée selon la revendication 3, **caractérisé en ce que** les évidements sont formés par des évidements longitudinaux (22).

6. Moteur-fusée selon les revendications 2 et 5, **caractérisé en ce que** les évidements longitudinaux (22) sont prévus entre les bandes longitudinales (16).

7. Moteur-fusée selon l'une des revendications précédentes, **caractérisé en ce que** la charge propulsive intérieure (20) est pourvue d'un support longitudinal (16).

8. Moteur-fusée selon les revendications 2 et 7, **caractérisé en ce que** les bandes longitudinales (16) sont pourvues d'un support longitudinal (16).

9. Moteur-fusée selon l'une des revendications précédentes, **caractérisé en ce que** des appuis (18) sont prévus pour fixer radialement l'extrémité postérieure de la charge propulsive intérieure (5) sur la structure de chambre de combustion (2).

10. Moteur-fusée selon l'une des revendications précédentes, **caractérisé en ce que** pour former un tronçon de buse (13) qui s'élargit, le tronçon d'extrémité (15) de la charge propulsive extérieure (4) s'élargit vers l'extérieur sur la face intérieure et/ou le tronçon d'extrémité (16) de la charge propulsive intérieure (5) se rétrécit vers l'intérieur sur la face extérieure.

11. Moteur-fusée selon l'une des revendications précédentes, **caractérisé en ce que** la charge propulsive intérieure (5) est fixée sur la face frontale (17) antérieure de la chambre de combustion.
